Europäisches Patentamt

European Patent Office

Office européen des brevets

(11) Publication number: **0 231 631**
**B1**

# EUROPEAN PATENT SPECIFICATION

(45) Date of publication of patent specification: **18.07.90**

(21) Application number: **86309855.4**

(22) Date of filing: **17.12.86**

(51) Int. Cl.⁵: **A 63 B 21/00,** G 05 D 3/14, H 02 P 7/288

(54) **Motor control circuit for a simulated weight stack.**

(30) Priority: **23.12.85 US 812277**

(43) Date of publication of application:
**12.08.87 Bulletin 87/33**

(45) Publication of the grant of the patent:
**18.07.90 Bulletin 90/29**

(84) Designated Contracting States:
**AT BE CH DE ES FR GB IT LI LU NL SE**

(56) References cited:
**EP-A-0 060 302**
**EP-A-0 148 671**
**US-A-4 569 518**

(73) Proprietor: **BALLY MANUFACTURING CORPORATION**
**8700 West Bryn Mawr Avenue**
**Chicago Illinois 60631 (US)**

(72) Inventor: **Keane,Martin A.**
**1322 South Chestnut**
**Arlington Heights Illinois 6005 (US)**

(74) Representative: **SERJEANTS et al**
**25, The Crescent King Street**
**Leicester, LE1 6RX (GB)**

Courier Press, Leamington Spa, England.

## Description

Technical field

The present invention relates to a control for a DC motor coupled to a user interface to simulate a weight stack in an exercise machine and more particularly to a control for a DC motor simulating a weight stack initially supported by a spring over small displacements of the user interface.

Background of the invention

Exercise machines are known in which various devices are used to simulate a weight stack to provide a counterforce to a user of the machine. One known exercise machine employs a hydraulic cylinder to apply a counterforce to an exercise bar engaged by the user wherein a computer controls the force applied by the hydraulic cylinder. Another known type of exercise machine employs an alternator or generator coupled to an electrical load resistor to apply a counterforce to the user. In this type of machine, as the rotational velocity of the alternator or generator increases, so does the counterforce felt by the user. These known types of exercise machines are very costly and do not adequately simulate a weight stack.

To provide an economical exercise machine, it is desirable to use a DC motor to provide a counterforce which simulates a weight stack. Attempts have been made to provide a DC motor to apply the counterforce against the user as soon as the user interface or exercise bar is displaced. Such attempts are described in EP—A—148671 and EP—A—60302. When using machines according to the teachings of those earlier Patents, however, it was found that the machines always had the most unnatural 'feel'. For that reason the use of motors to simulate a weight stack never gained wide user acceptance.

Summary of the invention

The invention is based on an appreciation of the reason for the user-rejection of earlier proposed motor control to simulate a weight stack. The instability and unnatural 'feel' associated with such apparatus is associated with the size of the counterforce applied when the user interface or exercise bar is moved only marginally from its rest position. The Applicants have found that by controlling the counterforce provided by the motor in the initial stages of movement, and establishing the maximum counterforce only when the user interface or exercise bar has moved through a small initial displacement, user acceptance of the apparatus is vastly improved. The Applicants have described the start characteristic of the motor control of their invention as a 'soft-start' characteristic.

The invention provides an exercise machine having a user interface engaged by the user during exercising and a DC motor coupled to the user interface for exerting against the user a counterforce simulating a weight stack, characterised in that the exercise machine further comprises a control means for the DC motor comprising means for sensing the extent of the displacement of the user interface to provide a displacement signal ($V_D$) proportional thereto, and means responsive to the displacement signal ($V_D$) for controlling the DC motor to cause the motor to provide a motive force as a function of the displacement of the user interface, attaining the value of the counterforce only after movement of the user interface through an initial displacement from a rest position, in order to simulate a weight stack that is initially supported by a spring.

In a preferred embodiment of the invention the control includes a position transducer for sensing the displacement of the rotor or armature of the DC motor and thus the displacement of the user interface to provide a voltage proportional thereto. The control also includes a potentiometer for providing a maximum torque voltage which represents the maximum counterforce to be provided by the DC motor to simulate the total weight of the weight stack. A circuit is provided which forms a control voltage from the minimum of the displacement voltage and the maximum torque voltage such that the control voltage increases in proportion with the displacement voltage to the level of the maximum torque voltage. The control voltage is used to generate an armature current for the DC motor, the armature current being proportional to the control voltage in order to soft start the DC motor and provide a counterforce which gradually increases to a maximum value when the user interface is initially displaced.

Brief description of the drawings

Figure 1 is a schematic diagram of the DC motor control circuit for an exercise machine according to the present invention; and

Figure 2 is a graph illustrating how the control voltage generated for the DC motor of Figure 1 varies as a function of displacement of the user interface.

Best mode for carrying out the invention

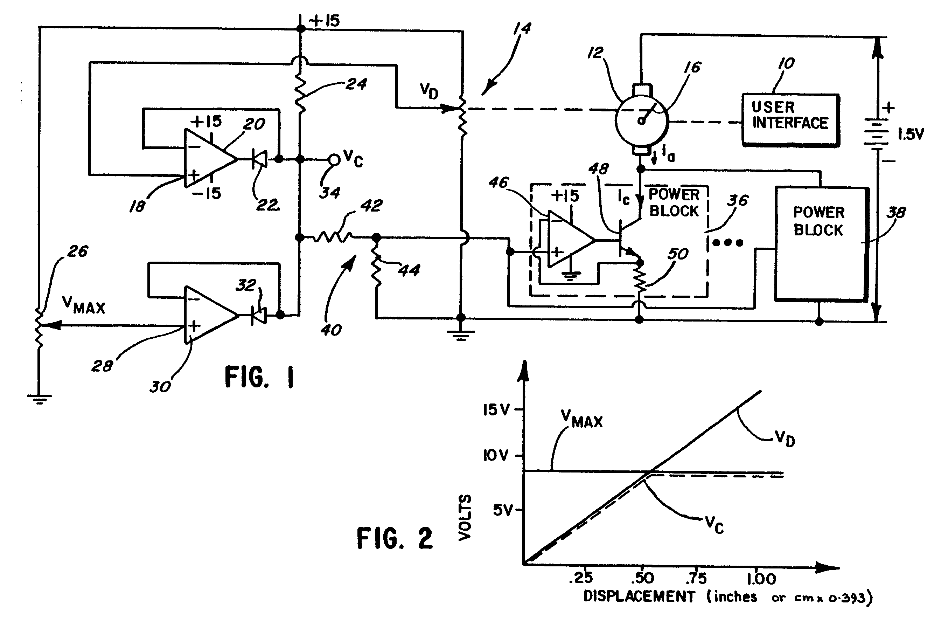

The exercise machine of the present invention, as shown in Figure 1, includes a user interface 10 such as an exercise bar or the like which is engaged by a user of the machine to exert a force. The user interface 10 is coupled to a DC motor 12 which exerts a counterforce against the user. The DC motor 12 is controlled by the remaining portion of the circuit shown in Figure 1 to provide a counterforce which simulates a weight stack initially supported by a spring over very small displacements of the user interface.

A position transducer 14 is provided to sense the position of the armature or rotor 16 of the DC motor 12. The position transducer 14 provides a voltage, $V_D$, as shown in Figure 2, which is proportional to the displacement of the rotor 16 and thus proportional to the displacement of the user interface 10. The displacement voltage $V_D$ is coupled to the non-inverting input terminal 18 of an operational amplifier 20, which is configured as a voltage follower. The output of the operational amplifier 20 is coupled to the cathode of a diode 22, the anode of which is coupled to +15 volts through a 1k Ω resistor 24.

A potentiometer 26, which is coupled to +15 volts, provides a maximum torque voltage, $V_{max}$, which represents the maximum counterforce to be provided by the DC motor 12 to simulate the total weight of the weight stack. By varying the setting of the potentiometer 26, the maximum counterforce or total weight of the stack simulated by the DC motor 12 can be changed. The maximum torque voltage, $V_{max}$, is applied to the non-inverting input terminal 28 of an operational amplifier 30 which is also configured as a voltage follower. The output of the operational amplifier 30 is coupled to the cathode of a diode 32, the anode of which is coupled to +15 volts through the resistor 24 to control the maximum value of a control voltage, $V_C$, generated at node 34. The control voltage $V_C$ follows the lesser of the displacement voltage $V_D$ and the maximum torque voltage $V_{max}$ so that it increases gradually in proportion with $V_D$ to the level of $V_{max}$.

The control voltage $V_C$ is coupled to a plurality of power blocks through a voltage divider 40 comprised of a 9.1k Ω resistor 42 and a 910 Ω resistor 44. For simplicity only two power blocks 36 and 38 out of a plurality of power blocks, numbering on the order of ten for example, are shown in Figure 1. The power blocks are connected in parallel and coupled to the DC motor 12 to control the armature current, $i_a$, of the motor. Each power block, as shown for block 36, includes an operational amplifier 46 having a non-inverting input terminal to which is applied the reduced control voltage from the voltage divider 40. The output of each operational amplifier is coupled to the base of a transistor 48, the emitter of which is connected to ground through a .1 Ω resistor 50. The transistor 48 may be a 710 amp, 760 watt Darlington transistor or a power FET. When current from the operational amplifier 46 is applied to the base of the transistor 48, a collector current $i_c$ is provided which is proportional to the control voltage $V_C$. The armature current $i_a$ of the DC motor 12 is equal to the sum of the collector currents $i_c$ from each of the power blocks 36 through 38. That is, $i_a = ni_c$ where n is equal to the number of power blocks. The armature current $i_a$ is proportional to the control voltage $V_C$ so that it increases gradually over small displacements of the user interface 10 to soft start the DC motor 12.

When a user initially engages the interface 10 to exert a force against the force provided by the DC motor 12, the position transducer generates a voltage $V_D$, as shown in Figure 2 which gradually increases as a function of the displacement of the user interface. When $V_D$ is less than the maximum torque voltage $V_{max}$, the control voltage $V_C$ applied to the voltage divider 40 follows $V_D$. The power blocks 36 through 38, in turn generate an armature current which gradually increases in proportion to $V_D$ when $V_D < V_{max}$ to soft start the DC motor 12. During this period the DC motor 12 provides a counterforce which simulates a weight stack initially supported by a spring. When the user interface 10 is displaced about one-half of an inch (1.2 cm) as shown in Figure 2, the displacement voltage, $V_D$, equals the maximum torque voltage, $V_{max}$. As the user interface 10 is displaced more, $V_D$ rises above $V_{max}$. Because $V_C$ follows the minimum of $V_D$ and $V_{max}$, when the user interface is displaced one-half of an inch (1.2 cm) or more, $V_C$ remains equal to the constant maximum torque voltage, $V_{max}$. The power blocks respond to the maximum control voltage to provide the maximum armature current to the DC motor 12 to cause the motor to provide a counterforce simulating the total weight of a weight stack supported by a spring. Because the DC motor is soft started, the control circuit shown in Figure 1 is very stable as well as economical.

## Claims

1. An exercise machine having a user interface (10) engaged by the user during exercising and a DC motor (12) coupled to the user interface (10) for exerting against the user a counterforce simulating a weight stack, characterised in that the exercise machine further comprises a control means for the DC motor comprising:
   means (14) for sensing the extent of the displacement of the user interface (10) to provide a displacement signal ($V_D$) proportional thereto; and
   means (20, 30) responsive to the displacement signal ($V_D$) for controlling the DC motor (12) to cause the motor to provide a motive force as a function of the displacement of the user interface (10), attaining the value of the counterforce only after movement of the user interface (10) through an initial displacement from a rest position in order to simulate a weight stack that is initially supported by a spring.

2. An exercise machine according to claim 1, wherein the motive force during the initial displacement of the user interface (10) rises as a linear function of displacement until it reaches the value of the counterforce.

3. An exercise machine according to either preceding claim, wherein the initial displacement of the user interface (10) is a linear displacement of approximately 0.5 inches (1.2 cm).

4. An exercise machine according to any preceding claim, wherein the motor control means (20, 30) comprises:
   means (20, 30) responsive to the displacement signal ($V_D$) for providing a control voltage ($V_C$) which increases to a maximum value (V max) in proportion to the displacement signal; and
   means (40, 36, 38) coupling the control voltage ($V_C$) to the DC motor (12) to control the motor.

5. An exercise machine according to claim 4, wherein the control voltage providing means (20, 30) includes:
   a first voltage follower (20), to an input (18) of which is applied the displacement signal ($V_D$) to provide a voltage which is proportional to the displacement of the user interface;

a second voltage follower (30), to an input (28) of which is applied a signal (V max) representing the maximum counterforce to be exerted by said DC motor; and

means coupled to the outputs of the first and second voltage followers for selecting the minimum voltage output from the followers as the control voltage (V_c).

6. An exercise machine according to claim 4 or claim 5, wherein the means coupling the control voltage (V_c) to the DC motor (12) comprises a plurality of power units (36, 38) controlled by the control voltage (V_c) to limit the armature current (i_a) through the DC motor (12) and thereby to control the output torque of the motor.

**Patentansprüche**

1. Übungsgerät mit einer Benutzerschnittstelle (10), an der der Benutzer während der Übung angreift, und einem mit der Benutzerschnittstelle gekoppelten Gleichstrommotor (12), der eine gegen den Benutzer gerichtete, einen Gewichtsstapel simulierende Gegenkraft ausübt, dadurch gekennzeichnet dass das Übungsgerät weiterhin eine den Gleichstrommotor steuernde Vorrichtung aufweist, die folgende Teile beinhaltet:

ein Mittel (14) zum Abtasten des Verschiebungsgrades der Benutzerschnittstelle (10) und Bereitstellen eines der Verschiebung proportionalen Verschiebungssignales (V_D) und

auf das Verschiebungssignal (V_D) ansprechende Mittel (20, 30) die den Gleichstrommotor (12) so steuern, daß dieser eine der Verschiebung der Benutzerschnittstelle (10) entsprechende bewegende Kraft bereitstellt, die den Wert der Gegenkraft erst nach einer anfänglichen Verschiebung der Benutzerschnittstelle (10) aus einer Ruhestellung heraus erreicht, um so einen anfänglich von einer Feder unterstützten Gewichtsstapel zu simulieren.

2. Übungsgerät gemäß Anspruch 1, wobei die bewegende Kraft während der anfänglichen Verschiebung der Benutzerschnittstelle (10) linear abhängig von dieser ansteigt, bis sie den Wert der Gegenkraft erreicht hat.

3. Übungsgerät gemäß einem der vorhergehenden Ansprüche, wobei die anfängliche Verschiebung der Benutzerschnittstelle (10) ca. 0,5 lineare Zoll (1,2 cm) beträgt.

4. Übungsgerät gemäß einem der vorhergehenden Ansprüche, wobei die Motorsteuermittel (20, 30) folgende Teile beinhalten:

auf das Verschiebungssignal (V_D) ansprechende Mittel (20, 30) zum Bereitstellen einer zum Verschiebungssignal proportionalen, auf einen Höchstwert (V max) ansteigenden Steuerspannung (V_c) und

Mittel (40, 36, 38) zum Koppeln der Steuerspannung (V_c) an den Gleichstrommotor (12) zu dessen Steuerung.

5. Übungsgerät gemäß Anspruch 4, wobei die die Steuerspannung bereitstellenden Mittel (20, 30)

einen ersten Spannungsfolger (20), an dessen einen Eingang (18) das Verschiebungssignal (V_D) zur Erzeugung einer zur Verschiebung der Benutzerschnittstelle proportionalen Spannung angelegt ist,

einen zweiten Spannungsfolger (30), an dessen einen Eingang (28) ein die maximale Gegenkraft des Gleichstrommotors darstellendes Signal (V max) angelegt ist, und

ein an die Ausgänge des ersten und zweiten Spannungsfolgers gekoppeltes Mittel beinhalten, das als Steuerspannung (V_c) die Mindest-Spannungsleistung der Spannungsfolger wählt.

6. Übungsgerät gemäß Anspruch 4 oder Anspruch 5, wobei die Mittel, die die Steuerspannung (V_c) an den Gleichstrommotor (10) koppeln, aus mehreren Netzteilen (36, 38) bestehen, die dadurch daß sie von der Steuerspannung (V_c) gesteuert werden, den durch den Gleichstrommotor (12) fließenden Ankerstrom (i_a) begrenzen und somit das Ausgangsdrehmoment des Motors steuern.

**Revendications**

1. Machine d'exercice ayant une interface (10) d'utilisateur qui est prise par l'utilisateur en cours d'exercice et un moteur (12) à courant continu couplé à l'interface (10) d'utilisateur pour exercer contre l'utilisateur une force opposée simulant un empilage de poids, caractérisée en ce que la machine d'exercice comprend en outre des moyens de commande pour le moteur à courant continu comprenant:

un moyen (14) destiné à détecter le degré du déplacement de l'interface (10) d'utilisateur pour produire un signal de déplacement (V_D) qui lui est proportionnel; et

des moyens (20, 30) qui, en réponse au signal de déplacement (V_D), sont destinés à commander le moteur à courant continu (12) pour amener le moteur à produire une force motrice en fonction du déplacement de l'interface (10) d'utilisateur, atteignant la valeur de la force opposée seulement après un mouvement de l'interface (10) d'utilisateur sur un déplacement initial depuis une position de repos, afin de simuler un empilage de poids qui est initialement supporté par un ressort.

2. Machine d'exercice selon la revendication 1, dans laquelle la force motrice durant le déplacement initial de l'interface (10) d'utilisateur croît suivant une fonction linéaire du déplacement jusqu'à ce qu'elle atteigne la valeur de la force opposée.

3. Machine d'exercice selon chacune des revendications précédentes, dans laquelle le déplacement initial de l'interface (10) de l'utilisateur est un déplacement linéaire d'environ 0,5 inch (1,2 cm).

4. Machine d'exercice selon l'une quelconque des revendications précédentes, dans laquelle les moyens (20, 30) de commande du moteur comprennent:

des moyens (20, 30) qui, en réponse au signal de déplacement (V_D), sont destinés à produire une tension de commande (V_c) qui croît jusqu'à une valeur maximale (V max) proportionnellement au signal de déplacement; et

des moyens (40, 36, 38) couplant la tension de commande ($V_c$) au moteur (12) à courant continu pour commander le moteur.

5. Machine d'exercice selon la revendication 4, dans laquelle les moyens (20, 30) produisant la tension de commande comprennent:

un premier élément (20) à charge de tension, à une entrée (18) duquel est appliqué le signal ($V_D$) de déplacement pour produire une tension qui est proportionelle au déplacement de l'interface d'utilisateur;

un second élément (30) à charge de tension à une entrée (28) duquel est appliqué un signal (V max) représentant la force antagoniste maximale devant être exercée par ledit moteur à courant continu; et

des moyens couplés aux sorties des premier et second éléments à charge de tension pour sélectionner la tension minimale de sortie de ces éléments en tant que tension de commande ($V_c$).

6. Machine d'exercice selon la revendication 4 ou la revendication 5, dans laquelle les moyens couplant la tension de commande ($V_c$) au moteur (12) à courant continu comprennent plusieurs unités de puissance (36, 38) commandées par la tension de commande ($V_c$) de manière à limiter le courant d'induit ($i_a$) traversant le moteur (12) à courant continu et à commander ainsi le couple de sortie du moteur.

FIG. 1

FIG. 2